# EUROPEAN PATENT SPECIFICATION

(11) **EP 2 673 911 B1**
(45) Date of publication and mention of the grant of the patent: **25.01.2017**
(21) Application number: 11799200.8
(22) Date of filing: 21.09.2011
(51) Int. Cl.: H04L 5/00

(54) **REFERENCE SIGNAL RESOURCE ALLOCATION IN A MULTI-CARRIER SYSTEM**
REFERENZSIGNALRESSOURCENZUWEISUNG IN EINEM MEHRTRÄGERSYSTEM
ALLOCATION DE RESSOURCE POUR SIGNAUX DE RÉFÉRENCE DANS UN SYSTÈME MULTI-PORTEUSE

(30) Priority: 10.02.2011 US 201161441412 P
(43) Date of publication of application: 18.12.2013
(73) Proprietor: Telefonaktiebolaget LM Ericsson (publ), 164 83 Stockholm (SE)
(72) Inventor: SORRENTINO, Stefano, S-171 68 Solna (SE); BALDEMAIR, Robert, S-171 70 Solna (SE); ASTELY, David, S-168 56 Bromma (SE)
(74) Representative: Ericsson
(86) International application number: PCT/SE2011/051131
(87) International publication number: WO 2012/108804

(56) References cited:
- FUJITSU: "Remaining Issues for Aperiodic SRS triggering and configuration", 3GPP DRAFT; R1-110465, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 12 January 2011 (2011-01-12), XP050490349, [retrieved on 2011-01-12]
- MOTOROLA: "Further Details on LTE-A Aperiodic SRS", 3GPP DRAFT; R1-103932 - DYNAMIC APERIODIC SRS LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050449309, [retrieved on 2010-06-22]
- ALCATEL-LUCENT ET AL: "Remaining Issues of Dynamic aperiodic SRS", 3GPP DRAFT; R1-104095_DYNAMIC_APERIODIC_SRS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050449380, [retrieved on 2010-06-22]

## Description

### TECHNICAL FIELD

The present invention relates generally to the control of devices in wireless communication networks, and more particularly relates to techniques for allocating reference signals to carrier resources in these networks.

### BACKGROUND

Orthogonal Frequency-Division Multiplexing (OFDM) technology is a key underlying component of the fourth-generation wireless network technologies known as Long-Term Evolution (LTE) and developed by the 3^{rd}-Generation Partnership Project (3GPP). As is well known to those skilled in the art, OFDM is a digital multi-carrier modulation scheme employing a large number of closely-spaced orthogonal sub-carriers. Each sub-carrier is separately modulated using conventional modulation techniques and channel coding schemes. In particular, 3GPP has specified Orthogonal Frequency Division Multiple Access (OFDMA) for the downlink transmissions from the base station to a mobile terminal, and single carrier frequency division multiple access (SC-FDMA) for uplink transmissions from a mobile terminal to a base station. Both multiple access schemes permit the available sub-carriers to be allocated among several users.

SC-FDMA technology employs specially formed OFDM signals, and is therefore often called "pre-coded OFDM" or Discrete-Fourier-Transform (DFT) -spread OFDM. Although similar in many respects to conventional OFDMA technology, SC-FDMA signals offer a reduced peak-to-average power ratio (PAPR) compared to OFDMA signals, thus allowing transmitter power amplifiers to be operated more efficiently. This in turn facilitates more efficient usage of a mobile terminal's limited battery resources. (SC-FDMA is described more fully in Myung, et al., "Single Carrier FDMA for Uplink Wireless Transmission," IEEE Vehicular Technology Magazine, vol. 1, no. 3, Sep. 2006, pp. 30-38.)

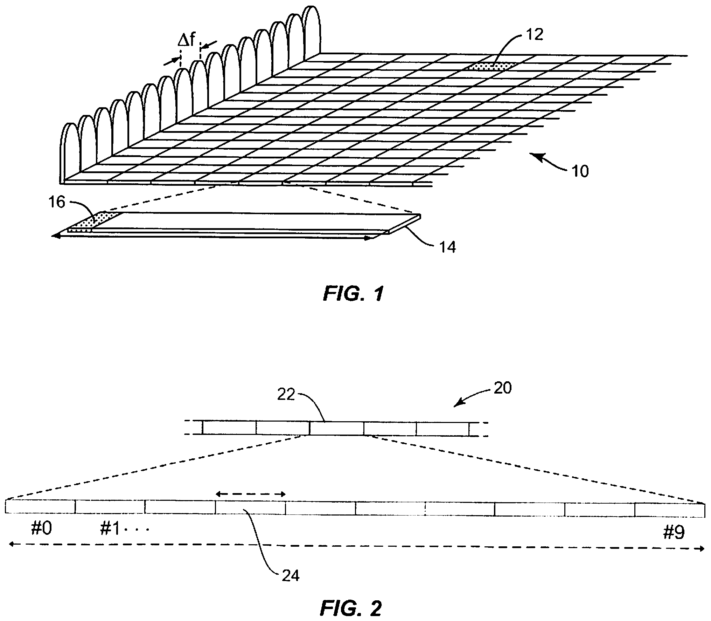

The basic LTE physical resource can be seen as a time-frequency grid. This concept is illustrated in Figure 1, which shows a number of so-called subcarriers in the frequency domain, at a frequency spacing of Δ*f*, divided into OFDM symbol intervals in the time domain. Each grid element 12 is called a resource element, and corresponds to one subcarrier during one OFDM symbol interval, on a given antenna port. One of the unique aspects of OFDM is that each symbol 14 begins with a cyclic prefix 16, which is essentially a reproduction of the last portion of the symbol 14 affixed to the beginning. This feature minimizes problems from multipath, over a wide range of radio signal environments.

In the time domain, LTE downlink transmissions are organized into radio frames of ten milliseconds each, each radio frame consisting of ten equally-sized subframes of one millisecond duration. This is illustrated in Figure 2, where an LTE signal 20 includes several frames 22, each of which is divided into ten subframes 24. Not shown in Figure 2 is that each subframe 24 is further divided into two slots, each of which is 0.5 milliseconds long.

LTE link resources are organized into "resource blocks," defined as time-frequency blocks with a duration of 0.5 milliseconds, corresponding to one slot, and encompassing a bandwidth of 180 kHz, corresponding to 12 contiguous sub-carriers with a spacing of 15 kHz. Resource blocks are numbered in the frequency domain, starting with 0 from one end of the system bandwidth. Two time-consecutive resource blocks represent a resource block pair, and correspond to the time interval upon which scheduling operates. Of course, the exact definition of a resource block may vary between LTE and similar systems, and the inventive methods and apparatus described herein are not limited to the numbers used herein.

In general, however, resource blocks may be dynamically assigned to mobile terminals, and may be assigned independently for the uplink and the downlink. Depending on a mobile terminal's data throughput needs, the system resources allocated to it may be increased by allocating resource blocks across several sub-frames, or across several frequency blocks, or both. Thus, the instantaneous bandwidth allocated to a mobile terminal in a scheduling process may be dynamically adapted to respond to changing conditions.

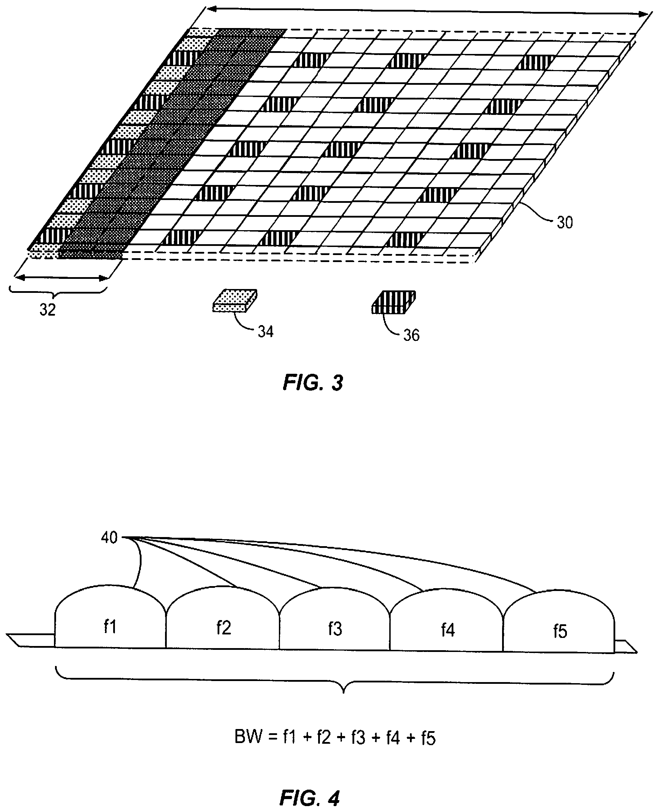

For scheduling of downlink data, the base station transmits control information in each subframe. This control information identifies the mobile terminals to which data is targeted and the resource blocks, in the current downlink subframe, that are carrying the data for each terminal. The first one, two, three, or four OFDM symbols in each subframe are used to carry this control signaling. In Figure 3, a downlink subframe 30 is shown, with three OFDM symbols allocated to control region 32. The control region 32 consists primarily of control data elements 32, but also includes a number of reference symbols 34, used by the receiving station to measure channel conditions. These reference symbols 34 are interspersed at pre-determined locations throughout the control region 32 and the rest of the subframe 30.

LTE also employs multiple modulation formats, including at least QPSK, 16-QAM, and 64-QAM, as well as advanced coding techniques, so that data throughput may be optimized for any of a variety of signal conditions. Depending on the signal conditions and the desired data rate, a suitable combination of modulation format, coding scheme, and bandwidth is chosen, generally to maximize the system throughput. Power control is also employed to ensure acceptable bit error rates while minimizing interference between cells. In addition, LTE uses a hybrid-ARQ (HARQ) error correction protocol where, after receiving downlink data in a subframe, the terminal attempts to decode it and reports to the base station whether the decoding was successful (ACK) or not (NACK). In the event of an unsuccessful decoding attempt, the base station can retransmit the erroneous data.

Release 8 of the LTE specifications has recently been standardized. Among its features is support for bandwidths up to 20 MHz. However, in order to meet the IMT-Advanced requirements for very high data rates, 3GPP has initiated work on LTE Release 10 specification. One objective of Release 10 is the support of bandwidths larger than 20 MHz.

However, one important requirement on LTE Release 10 is to assure backward compatibility with LTE Release 8, including with respect to spectrum compatibility. This means that an LTE Release 10 carrier signal, which might be wider than 20 MHz, should appear to a Release 8 mobile terminal in that event as several smaller LTE carriers. This concept is known as carrier aggregation (CA), or "multi-carrier" operation, and each of these smaller LTE carriers is often referred to as a component carrier (CC).

For some time following the initial deployment of LTE Release 10 networks, it can be expected that there will be a relatively small number of LTE Release 10-capable terminals, compared to so-called legacy terminals that are designed to Release 8 of the specifications. Therefore, it is necessary to assure an efficient use of a wide carrier also for legacy terminals, i.e., that it is possible to implement wide carriers, so that Release 10 mobile terminals can exploit the very high data rates, but in such a way that legacy terminals can be scheduled in each part of the wideband LTE Release 10 carrier. With carrier aggregation, an LTE Release 10 terminal can receive multiple component carriers, where each component carrier can have the same structure as a Release 8 carrier.

The carrier aggregation concept is illustrated in Figure 4, where five component carriers 40 are illustrated, with respective component carrier bandwidths of *f*1, *f*2, *f*3, *f*4*, f*5*.* In this case, the total bandwidth available to a Release 10 mobile terminal is the sum of the component carrier bandwidths. Release 8 mobile terminals can be scheduled to use resources in any one of the component carriers. Note that while the component carriers in Figure 4 are illustrated as contiguous (i.e., immediately adjacent to one another in frequency), aggregated carrier configurations where one or more of the component carriers is not adjacent to the others are also possible.

Furthermore, the number of aggregated component carriers, as well as the bandwidth for each individual component carrier, may be different for uplink and downlink operation. A symmetric configuration refers to the case where the number of component carriers in downlink and uplink is the same, while an asymmetric configuration refers to the case where the number of component carriers is different. It is important to note that the number of component carriers configured in a given cell may be different from the number of component carriers "seen" by a terminal. For instance, a particular terminal may support more downlink component carriers than uplink component carriers, for example, even though the cell is configured with the same number for uplink and downlink.

During initial access to the network, a LTE Release 10 terminal behaves similarly to a LTE Release 8 terminal. Upon successful connection to the network using a single component carrier for each of the uplink and downlink, a terminal may - depending on its own capabilities and the network - be configured with additional component carriers in either or both of the uplink and downlink. Configuration of the carriers is performed with Radio Resource Control (RRC) signaling.

Due to the heavy signaling and rather slow speed of RRC signaling, it is envisioned that a terminal may be configured to operate with multiple component carriers, even though not all of them are continuously used. If a terminal is configured on multiple component carriers, this would imply it has to monitor all downlink component carriers for the Physical Downlink Control Channel (PDCCH) and the Physical Downlink Shared Channel (PDSCH). This implies a wider receiver bandwidth, higher sampling rates, and so on, potentially resulting in high power consumption.

To mitigate the above problems, LTE Release 10 supports *activation* of component carriers, in addition to *configuration* of component carriers. The terminal continuously monitors only component carriers that are both configured and activated. Since the activation process is based on Medium Access Control (MAC) control elements - which are much faster than RRC signaling - an activation/de-activation process can quickly adjust the number of activated component carriers to match the number that are required to fulfill the current data rate needs. Upon arrival of large data amounts, multiple component carriers are activated, used for data transmission, and then quickly de-activated if no longer needed. All but one component carrier, the downlink *primary component carrier* (DL PCC), can be de-activated. Activation therefore provides the possibility to keep multiple component carriers configured, for activation on an as-needed basis. Most of the time, a terminal would have only one or a very few component carriers activated, resulting in a lower reception bandwidth and lower battery consumption.

Scheduling of a component carrier is done on the PDCCH, via downlink assignments. Control information on the PDCCH is formatted as a *downlink control information* (DCI) message. More specifically, DCI includes downlink scheduling assignments, including, for example, a Physical Downlink Shared Channel (PDSCH) resource indication, a transport format, hybrid-ARQ information, and control information related to spatial multiplexing, when applicable. A downlink scheduling assignment also includes a command for power control of the Physical Uplink Control Channel (PUCCH).

DCI also includes uplink scheduling grants, which include a Physical Uplink Shared Channel (PUSCH) resource indication, a transport format (e.g., an index to a predefined table of Modulation and Coding Schemes, or MCS), hybrid-ARQ related information and control information related to spatial multiplexing (if applicable). An uplink scheduling grant also includes a command for power control of the PUSCH uplink physical channel. Finally, DCI may also include power-control commands for a set of terminals, as a complement to the commands included in the scheduling assignments/grants.

Another core component in Release 10 of the LTE specifications is the support of MIMO antenna deployments and MIMO related techniques for both downlink communications, i.e., base station to mobile station transmissions, and uplink communications, i.e., mobile station to base station transmissions. More particularly, a spatial multiplexing mode for uplink communications, referred to as single-user MIMO, or "SU-MIMO", is under development. SU-MIMO is intended to provide mobile stations, called user equipment, or "UEs" in 3GPP terminology, with very high uplink data rates in favorable channel conditions.

SU-MIMO consists of the simultaneous transmission of multiple spatially multiplexed data streams within the same frequency bandwidth. Each of these multiplexed data streams is usually referred to as a "layer." Multi-antenna techniques such as linear precoding are employed at the UE's transmitter in order to differentiate the layers in the spatial domain and to allow the recovering of the transmitted data at the receiver of the base station, which is known as an eNodeB, or eNB, in 3GPP terminology.

Another MIMO technique supported by Release 10 of the 3GPP specifications (often referred to as LTE-Advanced) is MU-MIMO, where multiple UEs belonging to the same cell are at least partly co-scheduled in the same bandwidth and during the same time slots. Each UE in a MU-MIMO configuration may transmit multiple layers, thus operating in SU-MIMO mode.

### SUMMARY

In LTE, reference symbols used for estimating the radio channel between an eNodeB and a mobile station include a sounding reference signal, or SRS, transmitted by the mobile station. Because resources for SRS transmission are limited in time, frequency and space, several SRS triggering mechanisms have been developed in LTE, so that SRS is transmitted only when necessary. These triggering mechanisms include a specific "SRS trigger" field that is available on certain downlink control information formats intended for scheduling of uplink transmission resources. Improved triggering techniques are needed to address the complexities introduced by the development of multi-carrier systems. An example of such triggering techniques can be found in 3GPP document R1-103932, "Further Details on LTE-A Aperiodic SRS" from Motorola.

In several embodiments of the present invention, downlink DCI formats are employed for triggering SRS transmission in the uplink. An index of the uplink component carrier that should be used for the SRS transmission is derived from SIB-2 linking between the downlink component carrier targeted by the downlink DCI message, which in some cases is identified by a carrier identification field in the downlink DCI, and one of the uplink component carriers configured for the mobile station. Other embodiments are based on the definition of a default uplink component carrier, which is used for SRS transmission in the event that the SIB-2 based allocation is not possible or desired. Such a default uplink component carrier can be statically defined (e.g., the uplink component carrier associated to the primary cell, or PCell) or semi-statically signaled by Radio Resource Control (RRC) signaling.

The several embodiments disclosed herein include methods for transmitting sounding reference signals in a wireless communication network that supports multicarrier operation, including several methods that begin with the receiving, at a mobile station, of downlink control information (DCI) on a monitored downlink carrier. The DCI includes a downlink resource allocation for the mobile station and at least one sounding reference signal triggering bit. The method continues with the identification of which one of two or more downlink carriers is indicated by the downlink resource allocation. Then, one of two or more uplink carriers available for use by the mobile station is selected, based on the identified downlink carrier and based on a predetermined linking, if any, between the identified downlink carrier and an uplink carrier. A sounding reference signal is then transmitted on the selected uplink carrier. In several embodiments, the wireless communication network is a Long-Term Evolution (LTE) network and the predetermined linking is a SIB-2 link. In some cases, the identifying of which one of two or more downlink carriers is indicated by the downlink resource allocation is performed by determining which downlink carrier is indicated by a carrier index field included in the DCI, if any. In some cases, such as when there is no carrier index field included in the DCI, identifying which one of two or more downlink carriers is indicated by the downlink resource allocation comprises determining that the monitored downlink carrier itself is indicated by the downlink resource allocation.

In several embodiments, the selection of one of two or more uplink carriers available for use by the mobile station includes the selection of a predetermined default uplink carrier, upon determining that the mobile station is not configured with an uplink carrier linked to the identified downlink carrier. This predetermined default uplink carrier is a primary uplink component carrier, in some embodiments. In some embodiments, the selection of one of the uplink carriers available for use by the mobile station includes selecting an uplink carrier previously identified by a Radio Resources Control (RRC) message, upon determining that there is no predetermined linking corresponding to the identified downlink carrier.

The several methods summarized above include various methods for implementation at a wireless node, such as an LTE UE, that transmits sounding reference signals triggered by DCI transmitted from a remote station, such as an eNodeB. Corresponding methods are also disclosed for implementation at the other end of the wireless link, such as at an eNodeB that is configured to transmit DCI to one or more mobile stations.

In particular, several methods for signaling reference signal triggering information to a mobile station operating in a wireless communication network that supports multicarrier operation begin with the selection of one of two or more uplink carriers available for use by the mobile station. Next, the signaling node identifies which of a plurality of downlink carriers available for use by the mobile station is associated with the selected uplink carrier according to a predetermined linking, such as an SIB-2 link in an LTE system. Downlink control information (DCI) is then transmitted on a downlink carrier monitored by the mobile station, the DCI comprising a sounding reference signal triggering bit and a downlink resource allocation indicating the identified downlink carrier. In some cases, the identified downlink carrier differs from the monitored downlink carrier, in which case the DCI may include a carrier index field indicating the identified downlink carrier, in some embodiments. In response to the transmitted DCI, the signaling node receives a sounding reference signal on the selected uplink carrier.

Apparatus for carrying out the various processes disclosed herein are also described, including wireless transceivers that are configured to carry out the several methods summarized above and that are suitable for use in a mobile station or a base station. Of course, the present invention is not limited to the features and advantages summarized above. Indeed, those skilled in the art will recognize additional features and advantages of the present invention upon reading the following detailed description and viewing the attached drawings.

### BRIEF DESCRIPTION OF THE DRAWINGS

Figure 1 illustrates features of the OFDM time-frequency resource grid.
Figure 2 illustrates the time-domain structure of an LTE signal.
Figure 3 illustrates features of an LTE downlink subframe.
Figure 4 illustrates the aggregation of multiple carriers in a system that employs carrier aggregation.
Figure 5 illustrates components of an example wireless network.
Figures 6A and 6B illustrate the mapping of downlink control information to component carriers, with and without the use of a carrier identification field.
Figure 7 is a process flow diagram illustrating a method for transmitting sounding reference signals.
Figure 8 is a process flow diagram illustrating a method for signaling configuration information for sounding reference signal transmission.
Figure 9 is a block diagram illustrating features of an example wireless transceiver.

### DETAILED DESCRIPTION

Various embodiments of the present invention are now described with reference to the drawings, wherein like reference numerals are used to refer to like elements throughout. In the following description, numerous specific details are set forth for purposes of explanation, in order to provide a thorough understanding of one or more embodiments. It will be evident to one of ordinary skill in the art, however, that some embodiments of the present invention may be implemented or practiced without one or more of these specific details. In other instances, well-known structures and devices are shown in block diagram form in order to facilitate describing embodiments.

Note that although terminology from 3GPP's specifications for LTE, and LTE-Advanced, is used throughout this disclosure to exemplify the invention, this should not be seen as limiting the scope of the invention to only these systems. Other wireless systems including or adapted to include multi-carrier transmission techniques may also benefit from exploiting the ideas covered within this disclosure.

Also note that terminology such as "base station," "eNodeB," "mobile station," and "UE" should be considered non-limiting as applied to the principles of the invention. In particular, while detailed proposals applicable to the uplink in LTE-Advanced are described here, the described techniques may be applied to the downlink in other contexts. Thus, in general the base station or eNodeB in the discussion that follows may be considered more generically as "device 1" and the mobile station or "user equipment" (UE) considered as "device 2," in some circumstances, with these two devices comprising communication nodes, or communication stations, communicating with each other over a radio channel.

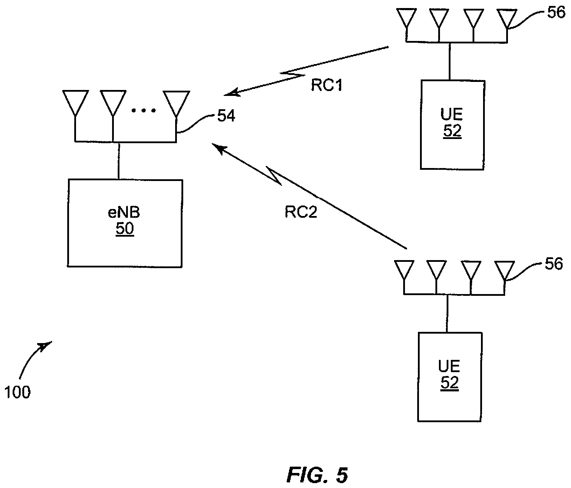

Figure 5 illustrates components of a wireless network 100, including base station 50 (labeled eNB, per 3GPP terminology) and mobile stations 52 (each labeled UE, again according to 3GPP terminology). eNB 50 communicates with UEs 52 using one or more antennas 54; individual ones or groups of these antennas are used to serve pre-defined sectors and/or to support any of various multi-antenna transmission schemes, such as multiple-input multiple-output (MIMO) transmission schemes. Likewise, each UE 52 communicates with eNB 50 using antennas 56. LTE-Advanced is expected to support UEs having up to four transmit antennas, and eNBs having as many as eight. Thus, the pictured UEs 52, each having four antennas, can transmit up to four spatially multiplexed layers to the eNB 52 over radio channels RC1 and RC2, depending on the channel conditions.

Several of the techniques that will be described in detail below can be implemented in connection with a wireless transceiver in a radio access terminal, such as the mobile stations 52 illustrated in Figure 5. A radio access terminal, which communicates wirelessly with fixed base stations in the wireless network, can also be called a system, subscriber unit, subscriber station, mobile station, mobile, remote station, remote terminal, mobile device, user terminal, terminal, wireless communication device, user agent, user device, or user equipment (UE). An access terminal can be a cellular telephone, a cordless telephone, a Session Initiation Protocol (SIP) phone, a wireless local loop (WLL) station, a personal digital assistant (PDA), a handheld device having wireless connection capability, or a computing device or other processing device connected to a wireless modem. Note that the term radio access terminal as used herein is not intended to be limited to devices that are normally carried and/or operated by individual users; the term also includes wireless devices intended for installation in so-called machine-to-machine (M2M) applications, fixed wireless applications, and the like.

Similarly, several of the techniques described below are implemented in connection with a wireless base station, such as the base station 50 illustrated in Figure 5. Base station 50 communicates with access terminals and may be referred to in various contexts as an access point, Node B, Evolved Node B (eNodeB or eNB), or some other terminology. Although the various base stations discussed herein are generally described and illustrated as though each base station is a single physical entity, those skilled in the art will recognize that various physical configurations are possible, including those in which the functional aspects discussed here, such as scheduling functions and radio functions, are split between two physically separated units. Thus, the term "base station" is used herein to refer to a collection of functional elements, one of which is a radio transceiver that communicates wirelessly with one or more mobile stations, which may or may not be implemented as a single physical unit.

As noted earlier, Release 10 of the 3GPP specifications for LTE includes support for carrier aggregation in both the downlink and uplink. This has several implications for both the scheduling of resources and for the measurement of channel characteristics.

In Release 8, a terminal only operates with one downlink and one uplink component carrier, so the association between downlink assignments, uplink grants, and the corresponding downlink and uplink component carriers is very clear. In Release 10, however, two modes of carrier aggregation need to be distinguished. The first mode is very similar to the operation of multiple Release 8 terminals, in that a downlink assignment or uplink grant contained in a DCI message transmitted on a component carrier is either valid for the downlink component carrier itself or for an uplink component carrier that is specifically associated to the downlink component carrier, either via cell-specific or UE-specific linking. In LTE systems, such linking between uplink and downlink carriers is called SIB-2 according to the Release 8 LTE terminology.

A second mode of operation, often termed "cross-carrier scheduling," augments a DCI message with a *carrier indicator field* (CIF). A DCI containing a downlink assignment with CIF is valid for the specific downlink component carrier indicated by that CIF, and a DCI containing an uplink grant with CIF is valid for the uplink component carrier that is linked, e.g., according to SIB-2, to the downlink component carrier that is indicated by the CIF.

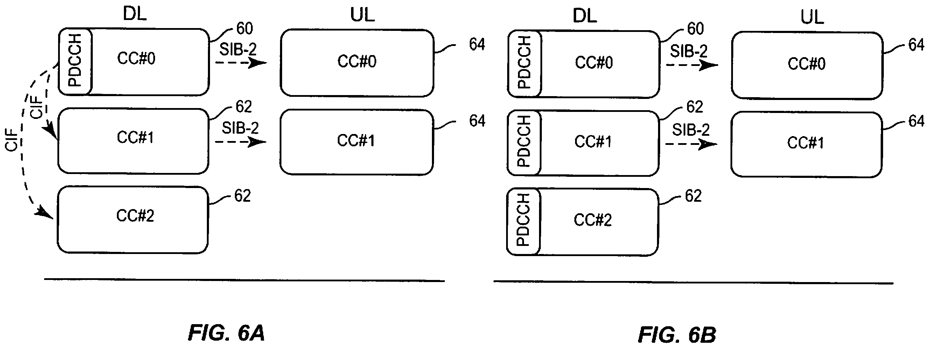

Examples of these modes are illustrated in Figures 6A and 6B. Figure 6A illustrates the cross-carrier scheduling mode of operation, in which DCI is transmitted only on the primary downlink component carrier 60, designated "CC#0". If there is no CIF in the DCI, then the downlink assignment or uplink grant in the DCI applies to downlink component carrier 60 or its "linked" uplink carrier, component carrier 64, respectively. On the other hand, the DCI may sometimes include a CIF that identifies another downlink component carrier 62, i.e., either CC#1 or CC#2. In this case, any downlink assignment or uplink grant applies to the downlink component carrier 62 identified by the CIF, or to its linked uplink component carrier 64, respectively. In the illustrated scenario, CC#2 is not linked to a corresponding uplink component carrier 64. As a result, any DCI that includes a CIF identifying CC#2 will not include an uplink grant.

Figure 6B illustrates an alternative mode of operation in which CIF is not used. In this case, the primarily downlink component carrier 60 and the secondary downlink component carriers 62 each have a PDCCH. If all three carriers are activated for a given mobile terminal, then the mobile terminal monitors all three PDCCH's for DCI. DCI transmitted on a given component carrier 60 or 62 does not include a CIF, and thus applies only to the component carrier on which it is received, or to the linked uplink component carrier 64. Thus, for example, if DCI received on the downlink component carrier 62 identified as "CC#1" includes an uplink grant, that uplink grant applies to the linked component carrier 64 identified as "CC#1."

As briefly discussed above, Release 10 also includes support for MIMO, again both in the downlink and uplink. To facilitate MIMO operation, the eNodeB must be able to characterize and monitor the channel conditions between itself and one or more served mobile terminals. More particularly, the eNodeB needs to estimate a radio channel for each transmitting antenna for the UE under consideration. Therefore, the UE needs to transmit a unique reference signal, preferably for each transmitting antenna.

In LTE, the symbols used for this purpose are known as a sounding reference signal, or SRS. The receiver, which is aware of which reference signal is associated to each antenna, estimates the associated channel by performing a channel estimation algorithm based on the received SRS, which is distorted by the uplink channel.

Knowledge about the MIMO channel at the eNodeB can be exploited for several applications, such as uplink MIMO antenna processing (e.g., by instructing the UE to adapt its transmission properties to the uplink channel), scheduling, and link adaptation in the uplink. Furthermore, assuming that uplink-downlink reciprocity of the wireless channel holds, link adaptation and adaptation of the downlink multi-antenna processing to the wireless channel properties are also enabled by knowledge of the uplink channel at the eNodeB side.

Considering that the resources for SRS transmission are limited in time, frequency and space, a number of SRS triggering mechanisms have been developed in LTE in order to transmit SRS only when necessary. Such triggering mechanisms include, among others, triggering SRS transmission by a specific "SRS trigger" field, which is available on certain DCI formats intended for scheduling of uplink transmission. SRS are then transmitted on certain pre-defined uplink OFDM symbols and on the same uplink component carrier assigned to the uplink data channel (PUSCH) by the corresponding DCI format.

Recently it has been decided that the Release 10 specifications for LTE will support triggering of uplink SRS transmissions via several DCI message formats originally intended only for scheduling downlink transmission. In particular, it has been agreed that such DCI formats will be provided with an SRS triggering field. However, no details have been mentioned regarding how to index the uplink component carrier on which SRS shall be transmitted.

When SRS transmission is triggered by an uplink DCI format, the same procedures described above for identifying the targeted uplink component carrier may be used. In other words, if SRS is triggered by an uplink scheduling assignment, the SRS are transmitted on the same uplink component carrier to which the uplink scheduling assignment applies. However, it has not yet been specified how to index the uplink component carrier on which SRS should be transmitted if SRS are instead triggered by a downlink assignment.

One solution is to explicitly signal to the UE the component carrier index for SRS transmission, e.g., by including a component carrier index field in the downlink DCI format or by an RRC-initiated signaling procedure. However, such a solution is not preferred, because it would increase the payload of the DCI format, resulting in reduced coverage for the PDCCH. Furthermore, an increase in the signaling overhead would result in deteriorated spectral efficiency for data transmission.

A better approach is to derive the index of the uplink component carrier from the SIB-2 linking and the CIF (if present) of the downlink DCI format employed for triggering SRS in the uplink. Alternative solutions are based on the definition of a default uplink component carrier in case the SIB-2 based allocation is not possible or desired. Such a default uplink component carrier can be statically defined (e.g., the uplink component carrier associated to the primary cell, or PCell) or semi-statically signalled by RRC.

Below, several alternative approaches and corresponding embodiments are provided for determining the uplink component carrier index in the case of multicarrier operation and where SRS triggering is performed using DCI formats originally intended for triggering downlink transmission (in the following referred to as "downlink triggering" for brevity).

A first solution for downlink triggering of SRS is to derive the uplink component carrier index from the downlink component carrier indexed by the downlink DCI format, through the corresponding SIB-2 link. Such a solution takes advantage of the fact that each downlink DCI format needs to indicate a downlink carrier, either by CIF (in case of cross-carrier scheduling) or by an implicit indexing rule (e.g., the same downlink component carrier on which the DCI format is transmitted).

The above approach, however, does not cover the case where a given downlink component carrier has no corresponding uplink component carrier linked by SIB-2. This scenario is most likely to occur when carriers are not configured in a symmetrical way in the downlink and uplink. For example, a given UE may be allocated fewer uplink carriers than downlink carriers, in which case at least one of the downlink component carriers does not have a linked uplink component carrier. Therefore, the above general approach can be augmented or modified by one or several of the following techniques.

In one approach, the uplink component carrier index is derived from the downlink component carrier indexed by the downlink DCI format through the corresponding SIB-2 link, if available. If the SIB-2 linked uplink component carrier is not available for the indexed downlink component carrier, then SRS is simply not transmitted.

In another approach, the uplink component carrier index is again derived from the downlink component carrier indexed by the downlink DCI format through the corresponding SIB-2 link, if available. However, if the SIB-2 linked uplink component carrier is not available for the indexed downlink component carrier, then SRS is transmitted on a default component carrier. One example of a rule for specifying the default component carrier in this circumstance is that the component carrier associated with the PCell, which is always configured, is used for SRS transmission in the event that an uplink component carrier corresponding to the downlink component carrier indexed by the downlink DCI format is not available. Other rules for designating a default component carrier under various circumstances are possible.

In still another approach, the uplink component carrier index once again is derived from the downlink component carrier indexed by the downlink DCI format through the corresponding SIB-2 link, if available. With this approach, however, if the SIB-2 linked uplink component carrier is not available for the indexed downlink component carrier, then the index of the uplink component carrier for SRS transmission is separately signaled. In one example of this approach, the index for the uplink component carrier to be used when the SIB-2 linked uplink is missing is signaled by an RRC message. RRC messages used for this purpose are likely to be updated only on a sporadic basis; therefore the associated overhead is assumed to be negligible.

Finally, an alternative solution for downlink triggering is to always transmit SRS on a default uplink component carrier, independently of the downlink component carrier indexed by the downlink DCI format. An example is the uplink component carrier associated to the Pcell, which is always configured. Alternatively, the default uplink component carrier can be derived from an RRC message.

The techniques described above allow flexible downlink triggering of SRS without introducing additional overhead, or by keeping it at a minimum. Ambiguous trigger cases are avoided. Furthermore, it is possible to exploit all of the available downlink triggering occasions, using some of the above techniques, thus preserving the potential gains provided by downlink triggering.

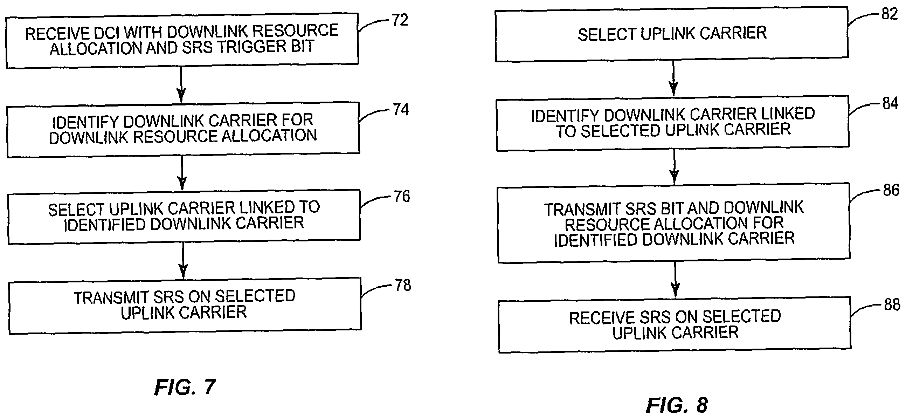

Figure 7 illustrates a generalized method for transmitting sounding reference signals, in accordance with several of the principles and techniques described above. This method is outlined as might be performed at a mobile station receiving downlink control information (DCI) from an eNodeB. Thus, as shown at block 72, the method begins with the receiving of DCI on a monitored downlink carrier, the DCI including a downlink resource allocation for the mobile station and at least one sounding reference signal triggering bit.

As shown at block 74, the illustrated method continues with the identification of which one of two or more downlink carriers is indicated by the downlink resource allocation. In some embodiments, this identification is done by determining which downlink carrier is indicated by a carrier index field included in the DCI, if present. In some of these and in some other embodiments, this identification operation may include determining that the monitored downlink carrier itself is indicated by the downlink resource allocation, upon determining that no carrier index field is included in the DCI.

Next, as shown at block 76, one of two or more uplink carriers available for use by the mobile station is selected, based on the identified downlink carrier and based on a predetermined linking, if any, between the identified downlink carrier and an uplink carrier. In an LTE network, for example, this predetermined linking may be an SIB-2 link. In some embodiments, the selection of one of the uplink carriers includes selecting a predetermined default uplink carrier upon determining that there is no predetermined linking corresponding to the identified downlink carrier. In others, the selection of one of the uplink carriers includes selecting an uplink carrier previously identified by a Radio Resources Control (RRC) message, upon determining that there is no predetermined linking corresponding to the identified downlink carrier.

Finally, as shown block 78, the sounding reference signal (SRS) is transmitted on the selected uplink carrier, in response to the received DCI. Other parameters in the DCI may specify the specific configuration of the SRS transmission and/or its duration.

The process illustrated in Figure 7 is applicable to a wireless node, such as an LTE UE, that is configured to transmit SRS in response to a triggering bit in DCI received from a remote station, such as an eNodeB. Figure 8 illustrates a corresponding method for signaling SRS configuration information in a multicarrier wireless network. This method, then, might be implemented at the other end of the wireless link, e.g., at an LTE eNodeB.

The method illustrated in Figure 8 begins, as shown at block 82, with the selecting of one of two or more uplink carriers available for use by the mobile station. A particular uplink carrier might be selected, for example, because the eNodeB lacks sufficient information about the channel conditions applicable to that uplink carrier, such that it cannot perform optimal scheduling or it cannot select a most appropriate MIMO configuration for uplink transmissions.

As shown at block 84, a downlink carrier linked to the selected uplink carrier is then identified; this downlink carrier is one of a plurality of downlink carriers available for use by the mobile station, and identified by virtue of its association with the selected uplink carrier according to a predetermined linking, such as an SIB-2 linking in an LTE multi-carrier network.

Next, as shown at block 86, downlink control information (DCI) is transmitted on a monitored downlink carrier, the DCI including a sounding reference signal triggering bit and a downlink resource allocation indicating the identified downlink carrier. In some embodiments and/or instances, the identified downlink carrier differs from the monitored downlink carrier, and the DCI includes a carrier index field (CIF) indicating the identified downlink carrier. In other embodiments and/or instances, the identified downlink carrier is the same as the monitored downlink carrier, and no CIF is included in the DCI.

Finally, as shown at block 88, a sounding reference signal (SRS) is received on the selected uplink carrier, in response to the DCI. As discussed earlier, this SRS may be used to characterize the channel conditions applicable to the selected carrier, for one or more antenna ports at the transmitting station.

In an LTE system, the processes illustrated in Figures 7 and 8, and variants thereof, are likely to be implemented in a mobile station and an eNodeB, respectively. However, the present invention is not limited to this particular system configuration. More generally, either of the processes illustrated in Figures 7 and 8 can be implemented in an appropriate wireless transceiver apparatus. In the case of the methods illustrated by Figure 7, this transceiver apparatus corresponds to a wireless network node that transmits sounding reference signals in response to triggering information received in downlink control information transmitted by a remote station. Likewise, in the case of the methods illustrated by Figure 8, this transceiver apparatus corresponds to a wireless network node that sends sounding reference signal trigger information in downlink control information, and that receives a sounding reference signal transmission in response.

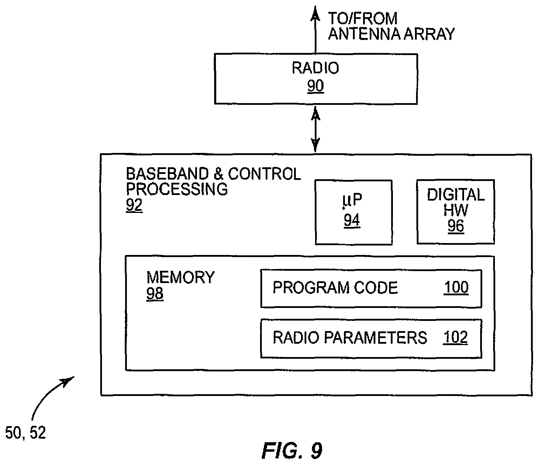

Although the complexity and detailed design of these wireless transceiver apparatuses might differ tremendously, depending, for example, on whether the transceiver is for use in an eNodeB or a mobile station, the components applicable to the presently disclosed techniques are similar. A few of the components relevant to the present techniques are thus pictured in Figure 9, as might be realized in either a mobile station or a base station. Accordingly, the apparatus pictured in Figure 9 can correspond to either end of the communication link pictured in Figure 5, i.e., as either eNB 50 or UE 52.

The pictured apparatus includes radio circuitry 90 and baseband & control processing circuit 92. Radio circuitry 90 includes receiver circuits and transmitter circuits that use known radio processing and signal processing components and techniques, typically according to a particular telecommunications standard such as the 3GPP standard for LTE and/or LTE-Advanced. Because the various details and engineering tradeoffs associated with the design and implementation of such circuitry are well known and are unnecessary to a full understanding of the invention, additional details are not shown here.

Baseband & control processing circuit 92 includes one or more microprocessors or microcontrollers 94, as well as other digital hardware 96, which may include digital signal processors (DSPs), special-purpose digital logic, and the like. Either or both of microprocessor(s) 94 and digital hardware 96 may be configured to execute program code 100, which is stored in memory 98 along with radio parameters 102. Again, because the various details and engineering tradeoffs associated with the design of baseband processing circuitry for mobile devices and wireless base stations are well known and are unnecessary to a full understanding of the invention, additional details are not shown here

The program code 100 stored in memory circuit 98, which may comprise one or several types of memory such as read-only memory (ROM), random-access memory, cache memory, flash memory devices, optical storage devices, etc., includes program instructions for executing one or more telecommunications and/or data communications protocols, as well as instructions for carrying out one or more of the techniques described herein, in several embodiments. Radio parameters 102 include various pre-determined configuration parameters as well as parameters determined from system measurements, such as channel measurements, and may include parameters relating uplink carriers to downlink carriers according to a pre-determined, static configuration, or according to a signaled configuration, e.g., via RRC signaling.

Accordingly, in various embodiments of the invention, a processing circuit, such as the baseband & control processing circuit 92 of Figure 9, are configured to carry out one or more of the techniques described above for signaling the allocation of SRS to component carriers and for responding to such signaling by associating SRS to the appropriate component carrier and transmitting SRS on that carrier. In some cases, the processing circuit is configured with appropriate program code, stored in one or more suitable memory devices, to implement one or more of the techniques described herein. Of course, it will be appreciated that not all of the steps of these techniques are necessarily performed in a single microprocessor or even in a single module.

Examples of several embodiments of the present invention have been described in detail above, with reference to the attached illustrations of specific embodiments. Because it is not possible, of course, to describe every conceivable combination of components or techniques, those skilled in the art will appreciate that the present invention can be implemented in other ways than those specifically set forth herein, without departing from essential characteristics of the invention. The present embodiments are thus to be considered in all respects as illustrative and not restrictive.

## Claims

1. A method of transmitting sounding reference signals in a wireless communication network that supports multicarrier operation, the method comprising receiving (72), at a mobile station, downlink control information, DCI, on a monitored downlink carrier, the DCI comprising a downlink resource allocation for the mobile station and at least one sounding reference signal triggering bit, **characterized in that** the method further comprises:
identifying (74) which one of two or more downlink carriers is indicated by the downlink resource allocation;
selecting (76) one of two or more uplink carriers available for use by the mobile station, based on the identified downlink carrier and based on a system information block 2, SIB-2, link, if any, between the identified downlink carrier and an uplink carrier wherein selecting (76) one of two or more uplink carriers available for use by the mobile station comprises selecting a predetermined default uplink carrier upon determining that the mobile station is not configured with a SIB-2 link between the identified downlink carrier and an uplink carrier.; and
transmitting (78) a sounding reference signal on the selected uplink carrier.

2. The method of claim 1, wherein identifying (74) which one of two or more downlink carriers is indicated by the downlink resource allocation comprises determining which downlink carrier is indicated by a carrier index field included in the DCI, if any.

3. The method of claim 1, wherein identifying (74) which one of two or more downlink carriers is indicated by the downlink resource allocation comprises determining that the monitored downlink carrier is indicated by the downlink resource allocation.

4. The method of claim 1, wherein the predetermined default uplink carrier is a primary uplink component carrier.

5. A wireless transceiver (52), comprising
a radio circuit (90) configured for communication with a wireless communication network
that supports multicarrier operation, and
a processing circuit (92) configured to receive, via the radio circuit (90), downlink control information, DCI, from a monitored downlink carrier, the DCI comprising a downlink resource allocation for the wireless transceiver (52) and at least one sounding reference signal triggering bit,
**characterized in that** the processing circuit (92) is further configured to:
identify which one of two or more downlink carriers is indicated by the downlink resource allocation;
select one of two or more uplink carriers available for use by the wireless transceiver (52), based on the identified downlink carrier and based on a system information block 2, SIB-2, link, if any, between the identified downlink carrier and an uplink carrier wherein the processing circuit (92) is configured to select one of two or more uplink carriers available for use by the wireless transceiver (52) by selecting a predetermined default uplink carrier upon that the mobile station is not configured with a SIB-2 link between the identified downlink carrier and an uplink carrier; and
transmit, via the radio circuit (90), a sounding reference signal on the selected uplink carrier.

6. The wireless transceiver (52) of claim 5, wherein the processing circuit (92) is configured to identify which one of two or more downlink carriers is indicated by the downlink resource allocation by determining which downlink carrier is indicated by a carrier index field included in the DCI, if any.

7. The wireless transceiver (52) of claim 5, wherein the processing circuit (92) is configured to identify which one of two or more downlink carriers is indicated by the downlink resource allocation by determining that the monitored downlink carrier is indicated by the downlink resource allocation.

8. The wireless transceiver (52) of claim 5, wherein the predetermined default uplink carrier is a primary uplink component carrier.

9. A method of signaling reference signal triggering information to a mobile station operating in a wireless communication network that supports multicarrier operation, **characterized in that** the method comprises:
selecting (82) one of two or more uplink carriers available for use by the mobile station;
identifying (84) which of a plurality of downlink carriers available for use by the mobile station is associated with the selected uplink carrier according to a system information block 2, SIB-2, link;
transmitting (86) downlink control information, DCI, on a monitored downlink carrier, the DCI comprising a sounding reference signal triggering bit and a downlink resource allocation for the identified downlink carrier; and
receiving (88) a sounding reference signal on a predetermined default uplink carrier if the mobile station is not configured with a SIB-2 link between the identified downlink carrier and an uplink carrier.

10. A wireless transceiver (50) configured for operation in a wireless communication network that supports multicarrier operation, the wireless transceiver (50) comprising a processing circuit (92) and a radio circuit (90) configured for communication with a mobile station, **characterized in that** the processing circuit (92) is configured to:
select one of two or more uplink carriers available for use by the mobile station;
identify which of a plurality of downlink carriers available for use by the mobile station is associated with the selected uplink carrier according to a system information block 2, SIB-2, link;
transmit, via the radio circuit (90), downlink control information, DCI, on a monitored downlink carrier, the DCI comprising a sounding reference signal triggering bit and a downlink resource allocation for the identified downlink carrier; and
receive, via the radio circuit (90), a sounding reference signal on a predetermined default uplink carrier if the mobile station is not configured with a SIB-2 link between the identified downlink carrier and an uplink carrier.

## Patentansprüche

1. Verfahren zum Übertragen von Sondierungsreferenzsignalen in einem drahtlosen Datenübertragungsnetz, das Mehrträgerbetrieb unterstützt, wobei das Verfahren bei einer Mobilstation das Empfangen (72) von Downlink-Steuerinformationen DCI auf einem überwachten Downlink-Träger umfasst, wobei die DCI eine Downlink-Ressourcenzuweisung für die Mobilstation und mindestens ein Triggerbit für ein Sondierungsreferenzsignal umfassen, **dadurch gekennzeichnet, dass** das Verfahren des Weiteren umfasst:
Ermitteln (74), welcher von zwei oder mehreren Downlink-Trägern durch die Downlink-Ressourcenzuweisung angezeigt wird;
Wählen (76) eines von zwei oder mehreren Uplink-Trägern, die zur Verwendung durch die Mobilstation auf Grundlage des identifizierten Downlink-Trägers und auf Grundlage gegebenenfalls eines Verbindungselements eines Systeminformationsblocks 2, SIB-2, zwischen dem identifizierten Downlink-Träger und einem Uplink-Träger verfügbar sind, wobei das Wählen (76) eines von zwei oder mehreren Uplink-Trägern, die zur Verwendung durch die Mobilstation verfügbar sind, das Wählen eines vorgegebenen Default-Uplink-Trägers beim Bestimmen umfasst, dass die Mobilstation nicht mit einem SIB-2-Verbindungselement zwischen dem identifizierten Downlink-Träger und einem Uplink-Träger konfiguriert ist; und
Übertragen (78) eines Sondierungsreferenzsignals auf den ausgewählten Uplink-Träger.

2. Verfahren nach Anspruch 1, wobei das Ermitteln (74), welcher von zwei oder mehreren Downlink-Trägern durch die Downlink-Ressourcenzuweisung angezeigt wird, ein Bestimmen umfasst, welcher Downlink-Träger durch ein Trägerindexfeld angezeigt wird, das gegebenenfalls in den DCI enthalten ist.

3. Verfahren nach Anspruch 1, wobei das Ermitteln (74), welcher von zwei oder mehreren Downlink-Trägern durch die Downlink-Ressourcenzuweisung angezeigt wird, ein Bestimmen umfasst, dass der überwachte Downlink-Träger durch die Downlink-Ressourcenzuweisung angezeigt wird.

4. Verfahren nach Anspruch 1, wobei der vorgegebene Default-Uplink-Träger ein primärer Uplink-Komponententräger ist.

5. Drahtloser Transceiver (52), umfassend
ein Funknetz (90), das für eine Verbindung mit einem drahtlosen Datenübertragungsnetz konfiguriert wird, das Mehrträgerbetrieb unterstützt, und
einen Verarbeitungsschaltkreis (92), der konfiguriert wird, über das Funknetz (90) Downlink-Steuerinformationen DCI von einem überwachten Downlink-Träger zu empfangen, wobei die DCI eine Downlink-Ressourcenzuweisung für den drahtlosen Transceiver (52) und mindestens ein Triggerbit für ein Sondierungsreferenzsignal umfassen,
**dadurch gekennzeichnet, dass** der Verarbeitungsschaltkreis (92) des Weiteren konfiguriert wird:
zu ermitteln, welcher von zwei oder mehreren Downlink-Trägern durch die Downlink-Ressourcenzuweisung angezeigt wird;
einen von zwei oder mehreren Uplink-Trägern zu wählen, die zur Verwendung durch den drahtlosen Transceiver (52) auf Grundlage des identifizierten Downlink-Trägers und auf Grundlage eines zwischen dem identifizierten Downlink-Träger und einem Uplink-Träger gegebenenfalls vorhandenen Verbindungselements des Systeminformationsblocks 2, SIB-2, verfügbar sind, wobei der Verarbeitungsschaltkreis (92) konfiguriert wird, einen von zwei oder mehreren Uplink-Trägern zu wählen, die zur Verwendung durch den drahtlosen Transceiver (52) durch Wählen eines vorgegebenen Default-Uplink-Trägers verfügbar sind, wenn die Mobilstation nicht mit einem SIB-2-Verbindungselement zwischen dem identifizierten Downlink-Träger und einem Uplink-Träger konfiguriert wird; und
über das Funknetz (90) ein Sondierungsreferenzsignal auf den ausgewählten Uplink-Träger zu übertragen.

6. Drahtloser Transceiver (52) nach Anspruch 5, wobei der Verarbeitungsschaltkreis (92) konfiguriert wird, durch Bestimmen, welcher Downlink-Träger durch ein Trägerindexfeld angezeigt wird, das gegebenenfalls in den DCI enthalten ist, zu ermitteln, welcher von zwei oder mehreren Downlink-Trägern durch die Downlink-Ressourcenzuweisung angezeigt wird.

7. Drahtloser Transceiver (52) nach Anspruch 5, wobei der Verarbeitungsschaltkreis (92) konfiguriert wird, durch Bestimmen, dass der überwachte Downlink-Träger durch die Downlink-Ressourcenzuweisung angezeigt wird, zu ermitteln, welcher von zwei oder mehreren Downlink-Trägern durch die Downlink-Ressourcenzuweisung angezeigt wird.

8. Drahtloser Transceiver (52) nach Anspruch 5, wobei der vorgegebene Default-Uplink-Träger ein primärer Uplink-Komponententräger ist.

9. Verfahren zum Signalisieren von Triggerinformationen eines Referenzsignals an eine Mobilstation, die in einem drahtlosen Datenübertragungsnetz betrieben wird, das Mehrträgerbetrieb unterstützt, **dadurch gekennzeichnet, dass** das Verfahren umfasst:
Wählen (82) eines von zwei oder mehreren Uplink-Trägern, die zur Verwendung durch die Mobilstation verfügbar sind;
Ermitteln (84), welcher aus einer Vielzahl von zur Verwendung durch die Mobilstation verfügbaren Downlink-Trägern mit dem ausgewählten Uplink-Träger gemäß einem Verbindungselement des Systeminformationsblocks 2, SIB-2, verbunden wird;
Übertragen (86) von Downlink-Steuerinformationen DCI auf einen überwachten Downlink-Träger, wobei die DCI ein Triggerbit eines Sondierungsreferenzsignals und eine Downlink-Ressourcenzuweisung für den identifizierten Downlink-Träger umfassen; und
Empfangen (88) eines Sondierungsreferenzsignals auf einem vorgegebenen Default-Uplink-Träger, wenn die Mobilstation nicht mit einem SIB-2-Verbindungselement zwischen dem identifizierten Downlink-Träger und einem Uplink-Träger konfiguriert wird.

10. Drahtloser Transceiver (50), der zum Betrieb in einem drahtlosen Datenübertragungsnetz konfiguriert wird, das Mehrträgerbetrieb unterstützt, wobei der drahtlose Transceiver (50) einen Verarbeitungsschaltkreis (92) und ein Funknetz (90) umfasst, das für eine Verbindung mit einer Mobilstation konfiguriert wird, **dadurch gekennzeichnet, dass** der Verarbeitungsschaltkreis (92) konfiguriert wird:
einen von zwei oder mehreren Uplink-Trägern zu wählen, die zur Verwendung durch die Mobilstation verfügbar sind;
zu ermitteln, welcher aus einer Vielzahl von zur Verwendung durch die Mobilstation verfügbaren Downlink-Trägern mit dem ausgewählten Uplink-Träger gemäß einem Verbindungselement des Systeminformationsblocks 2, SIB-2, verbunden wird;
über das Funknetz (90) Downlink-Steuerinformationen DCI auf einen überwachten Downlink-Träger zu übertragen, wobei die DCI ein Triggerbit des Sondierungsreferenzsignals und eine Downlink-Ressourcenzuweisung für den identifizierten Downlink-Träger umfassen; und
über das Funknetz (90) ein Sondierungsreferenzsignal auf einem vorgegebenen Default-Uplink-Träger zu empfangen, wenn die Mobilstation nicht mit einem SIB-2-Verbindungselement zwischen dem identifizierten Downlink-Träger und einem Uplink-Träger konfiguriert wird.

## Revendications

1. Procédé de transmission de signaux de référence de sondage dans un réseau de communication sans fil qui prend en charge un fonctionnement multiporteuse, le procédé comprenant l'étape consistant à recevoir (72), au niveau d'une station mobile, des informations de commande de liaison descendante, DCI, sur une porteuse de liaison descendante surveillée, les informations DCI comprenant une affectation de ressources de liaison descendante pour la station mobile et au moins un bit de déclenchement de signaux de référence de sondage, **caractérisé en ce que** le procédé comprend en outre les étapes ci-dessous consistant à :
identifier (74) quelle porteuse parmi deux porteuses de liaison descendante ou plus est indiquée par l'affectation de ressources de liaison descendante ;
sélectionner (76) l'une parmi deux porteuses de liaison montante ou plus disponibles en vue d'une utilisation par la station mobile, sur la base de la porteuse de liaison descendante identifiée et sur la base d'une liaison de bloc d'informations système 2, SIB-2, le cas échéant, entre la porteuse de liaison descendante identifiée et une porteuse de liaison montante, dans lequel l'étape de sélection (76) d'une parmi deux porteuses de liaison montante ou plus disponibles en vue d'une utilisation par la station mobile consiste à sélectionner une porteuse de liaison montante par défaut prédéterminée suite à une détermination selon laquelle la station mobile n'est pas configurée avec une liaison de bloc SIB-2 entre la porteuse de liaison descendante identifiée et une porteuse de liaison montante ; et
transmettre (78) un signal de référence de sondage sur la porteuse de liaison montante sélectionnée.

2. Procédé selon la revendication 1, dans lequel l'étape consistant à identifier (74) quelle porteuse parmi deux porteuses de liaison descendante ou plus est indiquée par l'affectation de ressources de liaison descendante comporte l'étape consistant à déterminer quelle porteuse de liaison descendante est indiquée par un champ d'index de porteuse inclus dans les informations DCI, le cas échéant.

3. Procédé selon la revendication 1, dans lequel l'étape consistant à identifier (74) quelle porteuse parmi deux porteuses de liaison descendante ou plus est indiquée par l'affectation de ressources de liaison descendante comporte l'étape consistant à déterminer que la porteuse de liaison descendante surveillée est indiquée par l'affectation de ressources de liaison descendante.

4. Procédé selon la revendication 1, dans lequel la porteuse de liaison montante par défaut prédéterminée est une porteuse composante de liaison montante principale.

5. Émetteur-récepteur sans fil (52), comprenant
un circuit radio (90) configuré en vue d'une communication avec un réseau de communication sans fil qui prend en charge un fonctionnement multiporteuse ; et
un circuit de traitement (92) configuré de manière à recevoir, par l'intermédiaire du circuit radio (90), des informations de commande de liaison descendante, DCI, en provenance d'une porteuse de liaison descendante surveillée, les informations DCI comprenant une affectation de ressources de liaison descendante pour l'émetteur-récepteur sans fil (52) et au moins un bit de déclenchement de signaux de référence de sondage ;
**caractérisé en ce que** le circuit de traitement (92) est en outre configuré de manière à :
identifier quelle porteuse parmi deux porteuses de liaison descendante ou plus est indiquée par l'affectation de ressources de liaison descendante ;
sélectionner l'une parmi deux porteuses de liaison montante ou plus disponibles en vue d'une utilisation par l'émetteur-récepteur sans fil (52), sur la base de la porteuse de liaison descendante identifiée et sur la base d'une liaison de bloc d'informations système 2, SIB-2, le cas échéant, entre la porteuse de liaison descendante identifiée et une porteuse de liaison montante, dans lequel le circuit de traitement (92) est configuré de manière à sélectionner l'une parmi deux porteuses de liaison montante ou plus disponibles en vue d'une utilisation par l'émetteur-récepteur sans fil (52), en sélectionnant une porteuse de liaison montante par défaut prédéterminée lorsque la station mobile n'est pas configurée avec une liaison de bloc SIB-2 entre la porteuse de liaison descendante identifiée et une porteuse de liaison montante ; et
transmettre, par l'intermédiaire du circuit radio (90), un signal de référence de sondage sur la porteuse de liaison montante sélectionnée.

6. Émetteur-récepteur sans fil (52) selon la revendication 5, dans lequel le circuit de traitement (92) est configuré de manière à identifier quelle porteuse parmi deux porteuses de liaison descendante ou plus est indiquée par l'affectation de ressources de liaison descendante, en déterminant quelle porteuse de liaison descendante est indiquée par un champ d'index de porteuse inclus dans les informations DCI, le cas échéant.

7. Émetteur-récepteur sans fil (52) selon la revendication 5, dans lequel le circuit de traitement (92) est configuré de manière à identifier quelle porteuse parmi deux porteuses de liaison descendante ou plus est indiquée par l'affectation de ressources de liaison descendante, en déterminant que la porteuse de liaison descendante surveillée est indiquée par l'affectation de ressources de liaison descendante.

8. Émetteur-récepteur sans fil (52) selon la revendication 5, dans lequel la porteuse de liaison montante par défaut prédéterminée est une porteuse composante de liaison montante principale.

9. Procédé de signalisation d'informations de déclenchement de signaux de référence à une station mobile dans un réseau de communication sans fil qui prend en charge un fonctionnement multiporteuse, **caractérisé en ce que** le procédé comporte les étapes ci-dessous consistant à :
sélectionner (82) une porteuse parmi deux porteuses de liaison montante ou plus disponibles en vue d'une utilisation par la station mobile ;
identifier (84) quelle porteuse parmi une pluralité de porteuses de liaison descendante disponibles en vue d'une utilisation par la station mobile est associée à la porteuse de liaison montante sélectionnée selon une liaison de bloc d'informations système 2, SIB-2 ;
transmettre (86) des informations de commande de liaison descendante, DCI, sur une porteuse de liaison descendante surveillée, les informations DCI comprenant un bit de déclenchement de signaux de référence de sondage et une affectation de ressources de liaison descendante pour la porteuse de liaison descendante identifiée ; et
recevoir (88) un signal de référence de sondage sur une porteuse de liaison montante par défaut prédéterminée si la station mobile n'est pas configurée avec une liaison de bloc SIB-2 entre la porteuse de liaison descendante identifiée et une porteuse de liaison montante.

10. Émetteur-récepteur sans fil (50) configuré en vue d'un fonctionnement dans un réseau de communication sans fil qui prend en charge un fonctionnement multiporteuse, l'émetteur-récepteur sans fil (50) comprenant un circuit de traitement (92) et un circuit radio (90) configuré en vue d'une communication avec une station mobile, **caractérisé en ce que** le circuit de traitement (92) est configuré de manière à :
sélectionner une porteuse parmi deux porteuses de liaison montante ou plus disponibles en vue d'une utilisation par la station mobile ;
identifier quelle porteuse parmi une pluralité de porteuses de liaison descendante disponibles en vue d'une utilisation par la station mobile est associée à la porteuse de liaison montante sélectionnée selon une liaison de bloc d'informations système 2, SIB-2 ;
transmettre, par l'intermédiaire du circuit radio (90), des informations de commande de liaison descendante, DCI, sur une porteuse de liaison descendante surveillée, les informations DCI comprenant un bit de déclenchement de signaux de référence de sondage et une affectation de ressources de liaison descendante pour la porteuse de liaison descendante identifiée ; et
recevoir, par l'intermédiaire du circuit radio (90), un signal de référence de sondage sur une porteuse de liaison montante par défaut prédéterminée si la station mobile n'est pas configurée avec une liaison de bloc SIB-2 entre la porteuse de liaison descendante identifiée et une porteuse de liaison montante.
